# EUROPÄISCHE PATENTSCHRIFT

(11) **EP 3 980 680 B1**
(45) Veröffentlichungstag und Bekanntmachung des Hinweises auf die Patenterteilung: **24.09.2025**
(21) Anmeldenummer: 20728454.8
(22) Anmeldetag: 22.05.2020
(51) Int. Cl.: F16M 11/22, B60K 35/00, B62J 45/20, F16M 11/04, F16M 13/02

(54) **HALTERUNG FÜR EIN FAHRZEUGINSTRUMENT MIT MAGNETISCHEM SICHERUNGSSTIFT**
MOUNT FOR A VEHICLE INSTRUMENT HAVING A MAGNETIC SECURING PIN
FIXATION POUR UN INSTRUMENT DE VÉHICULE COMPRENANT UNE TIGE DE BLOCAGE MAGNÉTIQUE

(30) Priorität: 06.06.2019 DE 102019208309
(43) Veröffentlichungstag der Anmeldung: 13.04.2022
(73) Patentinhaber: Robert Bosch GmbH, 70442 Stuttgart (DE)
(72) Erfinder: HAAG, Frieder, 72827 Wannweil (DE)
(86) Internationale Anmeldenummer: PCT/EP2020/064269
(87) Internationale Veröffentlichungsnummer: WO 2020/244933

(56) Entgegenhaltungen:
- WO-A1-2010/045398
- WO-A1-2017/076993
- DE-A1- 102012 211 697

## Beschreibung

Die Erfindung betrifft eine Halterung eines Fahrzeuginstruments wie beispielsweise einem Mess- und/oder Anzeigeinstrument zur Befestigung an einem Fahrzeug.

### Stand der Technik

Bei Fahrzeugen mit nicht fest installierten Tachometern oder Geschwindigkeitsanzeiger besteht die Gefahr, dass sie von Unbefugten entwendet werden können. Gerade bei Fahrrädern ist es daher oftmals zwingend notwendig, den Fahrradcomputer beim Abstellen des Fahrrads abzunehmen und mitzunehmen, um einen Diebstahl zu verhindern.

Selbst bei teureren Fahrradcomputern ist bisher keine mechanische Sicherung gegenüber einem Diebstahl vorgesehen. Statt dessen wird beispielsweise bei elektrisch angetriebenen Fahrrädern über die Bedienung des kombinierten Tachometers/Steuergerät, dem sogenannten Human-Machine-Interface (HMI), vereinzelt eine elektronische Verriegelung vorgenommen, die es dem Dieb unmöglich macht, den geklauten Fahrradcomputer am eigenen Fahrrad weiter zu verwenden. Dies schützt jedoch nicht vor einem Diebstahl aus reinem Vandalismus. Zwar ist eine Befestigung des Tachometers mittels Klebstoff durchaus denkbar, jedoch wegen der notwendigen Batteriewechsel oftmals unpraktikabel.

Aus der Schrift DE 10 2012 211 697 A1 ist ein Halterung für ein Mess- und/oder Anzeigeinstrument eines Fahrzeugs bekannt, wobei die Halterung eine Führung aufweist, in der das Mess- und/oder Anzeigeinstrument aufgenommen werden kann. Darüber hinaus ist ein Befestigungsmittel vorgesehen, mit dem die Halterung fest am Fahrzeug montiert werden kann. In der Halterung ist dabei ein Blockiermittel vorgesehen, mit dem die Herausnahme des Instruments aus der Führung und somit aus Halterung verhindert werden kann.

### Offenbarung der Erfindung

Mit der vorliegenden Erfindung wird eine Halterung für ein Fahrzeuginstrument, wie beispielsweise einem Mess- und/oder Anzeigeinstrument, beziehungsweise eine System bestehend aus Halterung und Mess- und/oder Anzeigeinstrument beansprucht. Hierbei ist vorgesehen, dass die Halterung an einem Fahrzeug, insbesondere an einem Zweirad befestigt werden kann. Hierzu sind zwei Befestigungselement vorgesehen, die mit wenigstens einem Befestigungsmittel lösbar verbunden sind und beispielsweise ein Rohr oder eine Lenkstange eines Zweirads umfassen. Der Kern der Erfindung besteht dabei darin, dass ein Arretierungsmittel und ein Magnet vorgesehen sind, wobei das Arretierungsmittel durch die Ansteuerung des Magneten bewegt werden kann. Die Bewegung des Arretierungsmittels bewirkt in einer ersten Stellung eine Arretierung des Mess- und/oder Anzeigeelements in der Halterung während in einer zweiten Stellung eine Freigabe des Mess- und Anzeigeelements zur Entnahme aus der Halterung ermöglicht.

Der Vorteil dieser Ausgestaltung besteht darin, dass durch eine Ansteuerung eines Magneten eine Arretierung des Mess- und/oder Anzeigeelements in einer Halterung gegen eine unbefugte Entnahme erreicht werden kann. Nur durch eine gezielte Ansteuerung des Magneten kann so das Mess- und/oder Anzeigeelement entnommen werden.

Das Arretierungsmittel und der Magnet können in einer Ausführung der Erfindung über eine mechanische Verbindung miteinander verbunden sein, beispielsweise einer Feder oder einem starren Verbindungselement. In einer optionalen weiteren Ausführung kann vorgesehen sein, dass das Arretierungsmittel in einem der Befestigungselemente der Halterung und der Magnet in dem Mess- und/oder Anzeigeinstrument angeordnet ist. Selbstverständlich ist auch die alternative Ausgestaltung möglich wonach das Arretierungsmittel in dem Mess- und/oder Anzeigeinstrument und der Magnet einem der Befestigungselementen angeordnet ist.

Der Magnet und das mit dem Magneten verbundene Arretierungsmittel kann dabei in der Halterung, z.B. in oder an einem der Befestigungselemente untergebracht sein. Zur Arretierung des Mess- und/oder Anzeigeelements kann dabei das Arretierungsmittel in eine Ausnehmung des Mess- und/oder Anzeigeelements eingreifen. Alternativ kann jedoch das Mess- und/oder Anzeigeelement auch einen Vorsprung, z.B. in Form eines Stifts aufweisen, an dem das Arretierungsmittel anliegt und so eine Bewegung verhindert. Hierbei kann der Vorsprung eine Öffnung oder einen Haken aufweist.

In einer alternativen Ausgestaltung kann vorgesehen sein, dass der Magnet und das mit dem Magneten verbundene Arretierungsmittel in dem Mess- und/oder Anzeigeelement angebracht oder untergebracht ist. Zur Arretierung des Mess- und/oder Anzeigeelements kann dabei das Arretierungsmittel in eine Ausnehmung wenigstens eines der zwei Befestigungselemente eingreifen. Weiterhin kann vorgesehen sein, dass das Arretierungsmittel im unbestromten Zustand des Magneten das Mess- und/oder Anzeigeinstrument in der Halterung arretiert. Diese Ausgestaltung hat den Vorteil, dass keine aktive Ansteuerung erfolgen muss, um die Entnahme des Mess- und/oder Anzeigeinstruments zu sichern. Die aktive Ansteuerung bzw. Bestromung ist dagegen nur notwendig, wenn das Mess- und/oder Anzeigeinstrument entnommen werden soll.

Gemäß Anspruch 1 ist vorgesehen, dass das Mess- und/oder Anzeigeinstrument in der arretierten Stellung den Zugang bzw. den Zugriff auf das lösbare Befestigungsmittel verhindert beziehungsweise blockiert, welches die Befestigungselemente verbindet.

Besonders vorteilhaft ist die Erfindung für den Fall, dass das Arretierungsmittel in der arretierten Stellung, z.B. im unbestromten Zustand des Magneten, einen Zugriff auf das Befestigungsmittel verhindert.

Die beiden Befestigungselemente können derart ausgestaltet sein, dass sie ein Teil des Fahrzeugs wenigstens teilweise umfassen. So ist denkbar, dass die Befestigungselemente ein Rohr, z.B. einen Lenker eines Zweirads umfassen und durch das Befestigungsmittel an dieses Rohr angepresst werden.

Das Arretierungsmittel kann durch den Magneten sowohl in einer reinen translatorischen Bewegung in eine der drei Raumrichtungen als auch in eine wenigstens teilweise rotatorische Bewegung versetzt werden. Bei einer reinen translatorische Bewegungen des Arretierungsmittel ist ein entsprechender Anschlag auf dem Gegenelement vorgesehen, z.B. ein Loch in der das Arretierungsmittel eingeführt wird oder einen Haken, auf den das Arretierungsmittel angreift. Bei einer wenigstens teilweise rotatorischen Bewegung kann zudem ein Umschließen eines entsprechenden Gegenelements vorgesehen sein, bei dem das Entfernen des Mess- und/oder Anzeigeinstruments zusätzlich erschwert wird.

Optional kann vorgesehen sein, dass der Magnet und das Arretierungsmittel mittels einer Feder verbunden sind. Hierdurch kann das Arretierungsmittel im unbestromten Zustand entweder ausgefahren oder eingefahren sein, während die Bestromung des Magneten, d.h. seine Aktivierung den umgekehrten Zustand erzeugt. Besonders vorteilhaft ist eine Ausgestaltung, bei der der Magnet durch die magnetische Wirkung die Feder entspannen oder stauchen lässt.

Eine weitere Ausbildung der Erfindung besteht dabei darin, dass das Arretierungsmittel über eine Feder mit einem der Befestigungselemente oder dem Mess- und/oder Anzeigeinstrument verbunden ist. In diesem Fall ist die Feder nicht mechanisch mit dem Magneten verbunden. Stattdessen wirkt der Magnet derart auf die Feder, dass sie unter dem Einfluss des magnetischen Feldes sich ausdehnt oder gestaucht wird. Hierbei kann vorgesehen sein, dass bei einer Stauchung das Mess- und/oder Anzeigeinstrument arretiert oder freigegeben wird.

Die vorgeschlagene Halterung kann bei jeder Form von Fahrzeugen zum Einsatz kommen. Besonders sind jedoch Fahrzeuge für diese Art von erfinderischen Halterung geeignet, die keinen abschließbaren Fahrerraum haben, so dass das Fahrzeuginstrument, wie beispielsweise das Mess- und/oder Anzeigeinstrument frei zugänglich angebracht ist. Aus diesem Grund eignet sich die beanspruchte Erfindung besonders bei Fahrräder, Mofas, Segways, Rollstühlen, eScootern, eBbikes, Kinderwägen, eRoller, etc..

Weitere Vorteile ergeben sich aus der nachfolgenden Beschreibung von Ausführungsbeispielen bzw. aus den abhängigen Patentansprüchen.

### Kurze Beschreibung der Zeichnungen

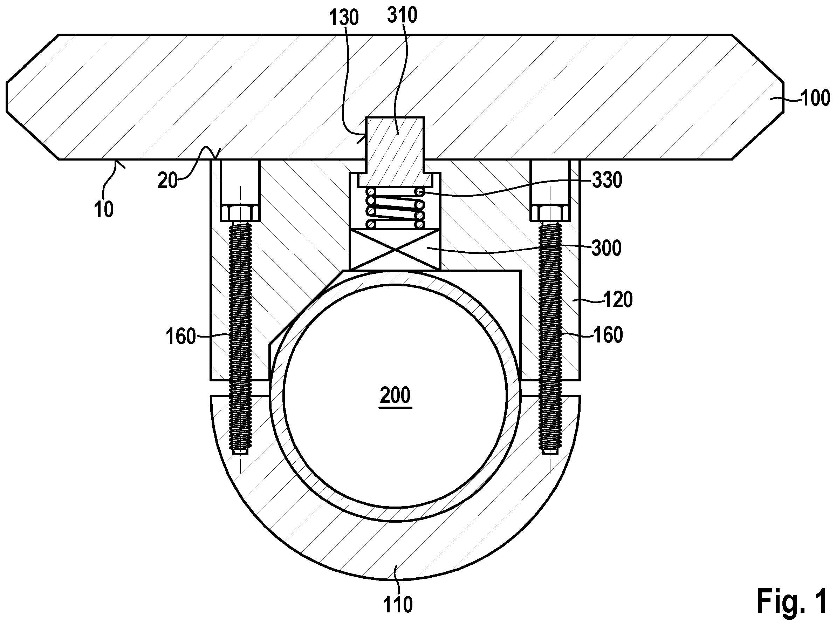

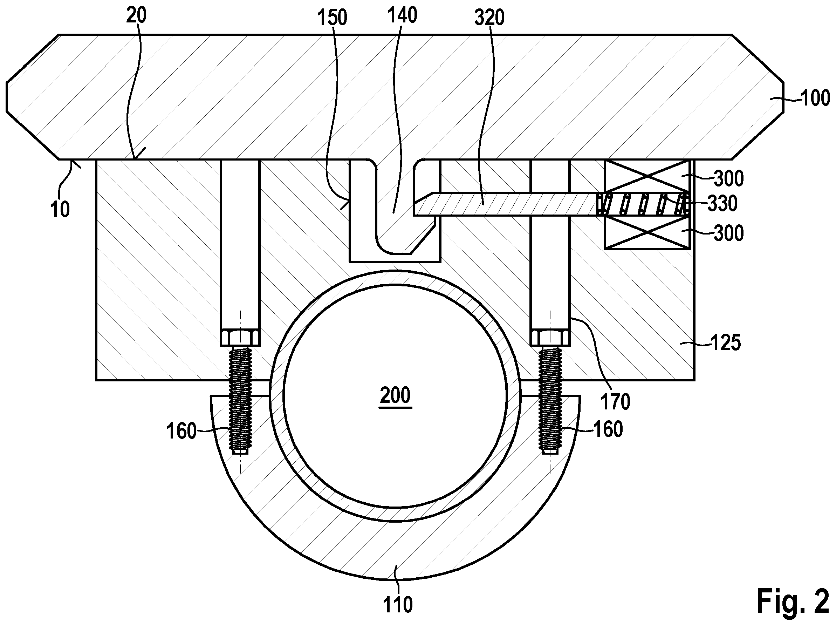

In der Figur 1 ist ein erstes Ausführungsbeispiel der Erfindung dargestellt, bei der das Arretierungsmittel in eine Ausnehmung des Mess- und/oder Anzeigeinstrument eingreift. Die Figur 2 zeigt ein zweites erfindungsgemäße Ausführungsbeispiel, bei dem das Mess- und/oder Anzeigeinstrument eine besondere Ausprägung aufweist, die in die Halterung eingeführt wird, um als Anschlag für das Arretierungsmittel zu dienen.

### Ausführungsformen der Erfindung

Die vorliegenden Erfindung beschreibt eine Halterung für ein Fahrzeuginstrument, z.B. ein Mess- und/oder Anzeigeinstrument. Weiterhin beschreibt die Erfindung ein System aus Halterung mit einem in der Halterung befindlichen Fahrzeuginstrument, z.B. ein Mess- und/oder Anzeigeinstrument. Dabei ist vorgesehen, dass ein Befestigungselement der Halterung oder das System ein magnetisch bewegliches Arretierungsmittel aufweist, welches das in der Halterung gehaltene Fahrzeuginstrument, z.B. das Mess- und/oder Anzeigeinstrument, gegen Entnahmen arretieren lässt. Hierbei kann das magnetisch bewegliche Arretierungsmittel in oder an einem der Befestigungselemente der Halterung beziehungsweise in oder an dem Mess- und/oder Anzeigeinstrument angeordnet sein. Weiterhin kann vorgesehen sein, dass der Magnet in einem der Befestigungselement der Halterung oder im Mess- und/oder Anzeigeinstrument angeordnet ist. Der Magnet und das Arretierungsmittel können zudem mechanisch miteinander verbunden sein, beispielsweise durch eine Feder oder eine starre Verbindung und zusammen in einem Befestigungselement der Halterung oder dem Mess- und/oder Anzeigeinstrument angeordnet sein.

Gemäß der Figur 1 ist ein erstes Ausführungsbeispiel der Erfindung dargestellt. Hierbei wird die Halterung durch zwei Befestigungselemente 110 und 120 realisiert, die die Halterung an ein Rohr 200 befestigen, z.B. einen Lenker eines Fahrrads. Zur Befestigung dieser Halterung werden die beiden Befestigungselement 110 und 120 mittels Befestigungsmitteln 160 in Form von Schrauben an das Rohr 200 geklemmt. Der Zugang zu den Befestigungsmitteln 160 erfolgt dabei von der oberen Seite 20 der Halterung, die zur Aufnahme des Mess- und/oder Anzeigeinstruments 100 vorgesehen ist. Die Aufnahme des Mess- und/oder Anzeigeinstruments 100, zum Beispiel ein Tacho oder eine Steuereinheit für eine Elektrofahrrad, kann aufgeschoben oder aufgesteckt werden. Wie aus der Figur 1 ersichtlich, wird bei vorgesehener Aufnahme des Mess- und/oder Anzeigeinstruments 100 der Zugang zu den Befestigungsmitteln 160 verdeckt. Eine Entfernung der Halterung und insbesondere der Befestigungselemente 110 und 120 von dem Rohr ist ohne eine Entnahme des Mess- und/oder Anzeigeinstruments 100 nicht möglich. Um diese Entnahme des Mess- und/oder Anzeigeinstruments 100 zu erschweren, wird erfindungsgemäß vorgeschlagen, in der Halterung ein mittels magnetische Beeinflussung bewegliches Arretierungsmittel 310 einzubringen, welches in eine an die Form des Arretierungsmittels 310 angepasste entsprechende Ausnehmung 130 auf der Unterseite 10 des Mess- und/oder Anzeigeinstruments 100 eingreift. Solange dieses Arretierungsmittel 310 in seiner ausgefahrenen bzw. arretierten Stellung gemäß der Figur 1 ist, kann das Mess- und/oder Anzeigeinstruments 100 nicht entnommen und die Halterung nicht von dem Rohr 200 entfernt werden, wodurch die Entnahme gegen Diebstahl geschützt ist. Die Ausgestaltung gemäß der Figur 1 zeigt weiterhin, dass das Arretierungsmittel 310 mittels einer Feder 330 mit einem Magneten 300 verbunden ist, welches seinerseits in einem der Befestigungselement 120 angeordnet ist. Vorteilhafterweise greift dabei das ausgefahrene Arretierungsmittel 310 im unbestromten Zustand des Magneten 300 in die Ausnehmung 130 ein. Hierzu kann die Feder 330 entsprechend vorgespannt sein. Durch eine Bestromung des Magneten 300 bzw. dessen Aktivierung kann mittels des so erzeugten magnetischen Feldes das magnetische Arretierungsmittel 310 angezogen werden, so dass es aus der Ausnehmung 130 auf der Unterseite 10 des Mess- und/oder Anzeigeinstruments 100 heraustritt. Eine Entnahme des Mess- und/oder Anzeigeinstruments 100 ist somit im bestromten bzw. aktivierten Zustand des Magneten 300 möglich. Alternativ oder zusätzlich kann auch vorgesehen sein, dass das magnetische Feld des aktivierten Magneten 300 auf die magnetische Feder 330 wirkt, so dass sie sich spannt und zurückzieht.

Zum Aufsetzen des Mess- und/oder Anzeigeinstruments 100 kann vorgesehen sein, dass das Arretierungsmittel 310 auf der Oberseite angefast ist, so dass ein Aufschieben des Mess- und/oder Anzeigeinstruments 100 auf die Halterung durch manuelles zurückdrücken der Feder 330 möglich ist, ohne den Magneten 300 zu aktivieren.

Ein zweites Ausführungsbeispiel gemäß der Figur 2 zeigt eine Ausgestaltung, bei der das Arretierungsmittel 320 seitlich bewegt wird. Hierbei wird ebenfalls das Mess- und/oder Anzeigeinstruments 100 mit seiner Unterseite 10 auf die Oberseite 20 eines der Befestigungselemente 125 der Halterung aufgebracht bzw. dort gehalten. Der Magnet 300 ist in diesem Ausführungsbeispiel seitlich angebracht. Die Feder 330, die in diesem Beispiel ebenfalls mit dem Arretierungsmittel 320 verbunden ist, ist dabei zwischen dem Magneten 300 angeordnet, so dass das Magnetische Feld direkt auf die Spannung der Feder 330 und somit die seitliche Bewegung des Arretierungsmittels 320 wirkt. Der Magnet 300 kann dabei als Einzelelement oder als zweitgeteilter Magnet ausgestaltet sein. Wie ebenfalls im ersten Ausführungsbeispiel beschrieben, deckt das Mess- und/oder Anzeigeinstruments 100 den Zugang zum Befestigungsmittel 160 ab, mittels dem die wenigstens zwei Befestigungselemente 110 und 125 die Halterung an das Rohr 200 befestigen. Zusätzlich wird der Zugang in der Vertiefung 130, in der sich ein Befestigungsmittel 160 befindet durch das Arretierungsmittel 330 selbst zumindest teilweise blockiert. Um an dieses Befestigungsmittel 160 zu gelangen ist eine Aktivierung des Magneten 300 und somit ein Zurückziehen des Arretierungsmittels 330 notwendig. Durch diese zusätzliche Blockierung wird eine Entfernung auch der Halterung erschwert.

In der Figur 2 wird zusätzlich eine weitere Ausgestaltung der Arretierung gezeigt. Hierbei weist das Mess- und/oder Anzeigeinstruments 100 einen Haken 140 auf, der in eine Ausnehmung 150 der Halterung bzw. des oberen Befestigungselements 125 eingebracht ist. Dieser Haken 140 dient als Anschlag für das seitlich bewegliche Arretierungsmittel 320 im ausgefahrenen Zustand. Wird das Arretierungsmittel 320 über die Feder 330 zurückgezogen, kann das Mess- und/oder Anzeigeinstruments 100 aus der Halterung entnommen werden. Alternativ zu dem gezeigten Haken 140 kann das Mess- und/oder Anzeigeinstruments 100 auch einen Stift mit einer Öffnung aufweisen, in die das Arretierungsmittel 320 zur Arretierung eingebracht wird. Wie bereits beim ersten Ausführungsbeispiel kann auch bei diesem zweiten Ausführungsbeispiel der seitlichen Anordnung des Arretierungsmittels 320 eine Anfasung vorgesehen sein, so dass ein Einstecken des Hakens 140 bzw. des Stifts die Feder 330 zurückdrückt.

Statt einer linearen Bewegung des Arretierungsmittels 310 bzw. 320 kann auch vorgesehen sein, dass eine rotatorische Bewegung vollzogen wird. Hierdurch kann das Arretierungsmittel in einer Drehbewegung an einen entsprechenden Anschlag oder in eine Öffnung zur Arretierung hinein gedreht werden.

Die Bauform gemäß der Figur 1 erlaubt es eine relativ kleine Fläche am Rohr bzw. Lenker für den Halter vorzuhalten, indem das Arretierungsmittel nach oben bewegt wird. Demgegenüber ist gemäß der Figur 2 mit der seitlichen Anbringung des Arretierungsmittels eine größere Fläche vorgesehen, die ihrerseits jedoch eine größere und stabilere Auflagefläche ermöglicht.

In einer weiteren Ausführungsform, zu der keine Abbildung vorliegt, kann vorgesehen sein, das Arretierungselement und den Magneten in unterschiedlichen Vorrichtungsteilen unterzubringen. So ist denkbar, den Magneten entweder in eines der Befestigungselemente oder in das Mess- und/oder Anzeigeinstruments unterzubringen. Das Arretierungsmittel ist dabei in dem entsprechenden anderen Teil untergebracht, d.h. im Mess- und/oder Anzeigeinstruments oder im Befestigungselement. Durch die Aktivierung des Magneten im Befestigungselement lässt sich somit das Arretierungsmittel im Mess- und/oder Anzeigeinstruments in eine Arretierungsstellung oder aus dieser Arretierungsstellung in eine Freigabeposition bringen. Hierzu kann das Arretierungsmittel in eine entsprechende Aufnahme in einem der Befestigungselemente eingreifen oder an einen dort befindlichen Anschlag anschlagen. Selbstverständlich ist auch eine vertauschte Situation möglich, bei der der Magnet im Mess- und/oder Anzeigeinstruments untergebracht ist und das Arretierungsmittel mittels des magnetischen Feldes in einem der Befestigungselemente zur Bewegung bringt. Diese Ausgestaltung kann zudem noch den Vorteil bieten, dass das ohnehin elektrifizierte Mess- und/oder Anzeigeinstruments einen elektrischen Anschluss aufweist, während ein Magnet im Befestigungselement zusätzlich elektrifiziert werden müsste.

## Patentansprüche

1. Halterung für ein Mess- und/oder Anzeigeinstrument (100) zur Befestigung an einem Fahrzeug, insbesondere an einem Zweirad, wobei die Halterung zur Befestigung an dem Fahrzeug zwei Befestigungselemente (110, 120, 125) aufweist, die mit wenigstens einem Befestigungsmittel (160) lösbar verbunden sind, **dadurch gekennzeichnet, dass** die Halterung ein Arretierungsmittel (310, 320) und einen Magneten (300) aufweist, wobei mittels einer Ansteuerung des Magneten (300)
• eine Bewegung des Arretierungsmittels (310, 320) erzeugt wird und
• das Mess- und/oder Anzeigeinstrument (100) in der Halterung arretiert oder freigegeben wird,
wobei das Mess- und/oder Anzeigeinstrument (100) in der arretierten Stellung den Zugriff auf das lösbare Befestigungsmittel (160) blockiert.

2. Halterung nach Anspruch 1, **dadurch gekennzeichnet, dass** der Magnet (300) und das mit dem Magneten (300) verbundene Arretierungsmittel (310) in oder an einem der Befestigungselemente (110, 120, 125) der Halterung vorgesehen ist, wobei das Arretierungsmittel (310) zur Arretierung in einer Ausnehmung (130, 150) oder an einem Vorsprung des Mess- und/oder Anzeigeinstrument (100) in der Halterung anliegt.

3. Halterung nach Anspruch 1, **dadurch gekennzeichnet, dass** der Magnet (300) und das mit dem Magneten (300) verbundene Arretierungsmittel (310) in oder an dem Mess- und/oder Anzeigeinstrument (100) vorgesehen ist, welches in der Halterung gehalten wird, wobei das Arretierungsmittel (310) zur Arretierung in einer Ausnehmung wenigstens eines der zwei Befestigungselemente (110, 120, 125) eingreift.

4. Halterung nach einem der vorhergehenden Ansprüche, **dadurch gekennzeichnet, dass** das Arretierungsmittel (310) im unbestromten Zustand des Magneten (300) das Mess- und/oder Anzeigeinstrument (100) in der Halterung arretiert.

5. Halterung nach einem der Ansprüche 1 bis 3, **dadurch gekennzeichnet, dass** das Arretierungsmittel (310) im bestromten Zustand des Magneten (300) die Entnahme des Mess- und/oder Anzeigeinstrument (100) aus der Halterung ermöglicht.

6. Halterung nach einem der vorhergehenden Ansprüche, **dadurch gekennzeichnet, dass** das Arretierungsmittel (310, 320) im unbestromten Zustand des Magneten den Zugriff auf das lösbare Befestigungsmittel (160) blockiert.

7. Halterung nach einem der vorhergehenden Ansprüche, **dadurch gekennzeichnet, dass** die zwei Befestigungselemente (110, 120, 125) eine Befestigung an einem Rohr des Fahrzeugs ermöglicht, insbesondere an einem Lenker eines Zweirads.

8. Halterung nach einem der vorhergehenden Ansprüche, **dadurch gekennzeichnet, dass** die Bestromung des Magneten (300) eine rotatorische Bewegung des Arretierungsmittel (310, 320) erzeugt.

9. Halterung nach einem der vorhergehenden Ansprüche, **dadurch gekennzeichnet, dass** der Magnet (300) und das Arretierungsmittel (310, 320) mittels einer Feder miteinander verbunden sind, wobei insbesondere vorgesehen ist, dass die Federwirkung über den Magneten (300) gesteuert wird.

10. Halterung nach einem der vorhergehenden Ansprüche 1 bis 9, **dadurch gekennzeichnet, dass** der Magnet (300) in einem der Befestigungselemente (110, 120, 125) und das Arretierungsmittel (310, 320) in dem Mess- und/oder Anzeigeinstrument (100) angeordnet ist.

11. Halterung nach einem der vorhergehenden Ansprüche 1 bis 9, **dadurch gekennzeichnet, dass** das Arretierungsmittel (310, 320) in einem der Befestigungselemente (110, 120, 125) und der Magnet (300) in dem Mess- und/oder Anzeigeinstrument (100) angeordnet ist.

12. System umfassend
• eine Halterung für ein Mess- und/oder Anzeigeinstrument (100) zur Befestigung an einem Fahrzeug, insbesondere an einem Zweirad, nach einem der Ansprüche 1 bis 11 und
• ein in die Halterung zur Halterung eingebrachten Mess- und/oder Anzeigeinstrument (100).

## Claims

1. Holder for a measurement and/or display instrument (100) for fastening to a vehicle, in particular to a two-wheeler, wherein the holder for fastening to the vehicle has two fastening elements (110, 120, 125) which are releasably connected to at least one fastening means (160), **characterized in that** the holder has a locking means (310, 320) and a magnet (300), wherein, by means of actuating the magnet (300),
• a movement of the locking means (310, 320) is generated, and
• the measurement and/or display instrument (100) is locked or released in the holder,
wherein the measurement and/or display instrument (100) block/blocks access to the releasable fastening means (160) in the locked position.

2. Holder according to Claim 1, **characterized in that** the magnet (300) and the locking means (310) connected to the magnet (300) are provided in or on one of the fastening elements (110, 120, 125) of the holder, wherein the locking means (310) for locking bears in a recess (130, 150) or on a protrusion of the measurement and/or display instrument (100) in the holder.

3. Holder according to Claim 1, **characterized in that** the magnet (300) and the locking means (310) connected to the magnet (300) are provided in or on the measurement and/or display instrument (100), which is held in the holder, wherein the locking means (310) for locking engages in a recess of at least one of the two fastening elements (110, 120, 125).

4. Holder according to one of the preceding claims, **characterized in that** the locking means (310) locks the measurement and/or display instrument (100) in the holder in the non-energized state of the magnet (300).

5. Holder according to one of Claims 1 to 3, **characterized in that**, in the energized state of the magnet (300), the locking means (310) enables the measurement and/or display instrument (100) to be removed from the holder.

6. Holder according to one of the preceding claims, **characterized in that** the locking means (310, 320) blocks access to the releasable fastening means (160) in the non-energized state of the magnet.

7. Holder according to one of the preceding claims, **characterized in that** the two fastening elements (110, 120, 125) allow fastening to a tube of the vehicle, in particular to a handlebar of a two-wheeler.

8. Holder according to one of the preceding claims, **characterized in that** the energization of the magnet (300) generates a rotational movement of the locking means (310, 320).

9. Holder according to one of the preceding claims, **characterized in that** the magnet (300) and the locking means (310, 320) are connected to one another by means of a spring, wherein it is provided in particular that the spring action is controlled via the magnet (300).

10. Holder according to one of preceding Claims 1 to 9, **characterized in that** the magnet (300) is disposed in one of the fastening elements (110, 120, 125) and the locking means (310, 320) is disposed in the measurement and/or display instrument (100).

11. Holder according to one of preceding Claims 1 to 9, **characterized in that** the locking means (310, 320) is disposed in one of the fastening elements (110, 120, 125) and the magnet (300) is disposed in the measurement and/or display instrument (100).

12. System comprising:
• a holder for a measurement and/or display instrument (100) for fastening to a vehicle, in particular to a two-wheeler, according to one of Claims 1 to 11, and
• a measurement and/or display instrument (100) incorporated into the holder for holding purposes.

## Revendications

1. Support pour un instrument de mesure et/ou d'affichage (100) destiné à être fixé sur un véhicule, en particulier sur un deux-roues, le support destiné à être fixé sur le véhicule comportant deux éléments de fixation (110, 120, 125), qui sont reliés de manière amovible à au moins un moyen de fixation (160), **caractérisé en ce que** le support comporte un moyen d'arrêt (310, 320) et un aimant (300), un pilotage de l'aimant (300) permettant
• de générer un déplacement du moyen d'arrêt (310, 320), et
• d'arrêter ou de débloquer l'instrument de mesure et/ou d'affichage (100) dans le support,
l'instrument de mesure et/ou d'affichage (100) bloquant, dans la position arrêtée, le recours au moyen de fixation (160) amovible.

2. Support selon la revendication 1, **caractérisé en ce que** l'aimant (300) et le moyen d'arrêt (310) relié à l'aimant (300) sont prévus dans ou sur un des éléments de fixation (110, 120, 125) du support, le moyen d'arrêt (310) reposant dans le support pour l'arrêt dans un évidement (130,150) ou sur une partie faisant saillie de l'instrument de mesure et/ou d'affichage (100).

3. Support selon la revendication 1, **caractérisé en ce que** l'aimant (300) et le moyen d'arrêt (310) relié à l'aimant (300) sont prévus dans ou sur l'instrument de mesure et/ou d'affichage (100), lequel est supporté dans le support, le moyen d'arrêt (310) venant en prise pour l'arrêt avec un évidement d'au moins un des deux éléments de fixation (110, 120, 125).

4. Support selon l'une des revendications précédentes, **caractérisé en ce que** le moyen d'arrêt (310) arrête dans le support l'instrument de mesure et/ou d'affichage (100) lorsque l'aimant (300) n'est pas alimenté en courant.

5. Support selon l'une des revendications 1 à 3, **caractérisé en ce que** le moyen d'arrêt (310) permet le retrait de l'instrument de mesure et/ou d'affichage (100) hors du support lorsque l'aimant (300) est alimenté en courant.

6. Support selon l'une des revendications précédentes, **caractérisé en ce que** le moyen d'arrêt (310, 320) bloque le recours au moyen de fixation (160) amovible lorsque l'aimant n'est pas alimenté en courant.

7. Support selon l'une des revendications précédentes, **caractérisé en ce que** les deux éléments de fixation (110, 120, 125) permettent une fixation sur un tube du véhicule, en particulier sur un guidon d'un deux-roues.

8. Support selon l'une des revendications précédentes, **caractérisé en ce que** l'alimentation en courant de l'aimant (300) génère un mouvement de rotation du moyen d'arrêt (310, 320).

9. Support selon l'une des revendications précédentes, **caractérisé en ce que** l'aimant (300) et le moyen d'arrêt (310, 320) sont reliés l'un à l'autre au moyen d'un ressort, la commande de l'action du ressort par l'aimant (300) étant en particulier prévue.

10. Support selon l'une des revendications précédentes 1 à 9, **caractérisé en ce que** l'aimant (300) est disposé dans un des éléments de fixation (110, 120, 125) et le moyen d'arrêt (310, 320) est disposé dans l'instrument de mesure et/ou d'affichage (100).

11. Support selon l'une des revendications précédentes 1 à 9, **caractérisé en ce que** le moyen d'arrêt (310, 320) est disposé dans un des éléments de fixation (110, 120, 125) et l'aimant (300) est disposé dans l'instrument de mesure et/ou d'affichage (100).

12. Système comprenant :
• un support pour un instrument de mesure et/ou d'affichage (100) destiné à être fixé sur un véhicule, en particulier sur un deux-roues, selon l'une des revendications 1 à 11, et
• un instrument de mesure et/ou d'affichage (100) introduit dans le support pour le support.
